# EUROPÄISCHE PATENTSCHRIFT

(11) **EP 2 550 721 B1**
(45) Veröffentlichungstag und Bekanntmachung des Hinweises auf die Patenterteilung: **04.03.2015**
(21) Anmeldenummer: 11709953.1
(22) Anmeldetag: 24.03.2011
(51) Int. Cl.: H02K 21/16, H02K 21/00, H02K 3/00, H02K 3/28

(54) **ELEKTRISCHE MASCHINE UND LENKUNGSVORRICHTUNG**
ELECTRIC MACHINE AND STEERING DEVICE
MACHINE ÉLECTRIQUE ET DISPOSITIF DE DIRECTION

(30) Priorität: 24.03.2010 DE 102010003217
(43) Veröffentlichungstag der Anmeldung: 30.01.2013
(73) Patentinhaber: Brose Fahrzeugteile GmbH & Co. Kommanditgesellschaft, Würzburg, 97076 Würzburg (DE)
(72) Erfinder: OMBACH, Grzegorz, 81739 München (DE); JUNAK, Jacek, 97204 Höchberg (DE)
(74) Vertreter: Isarpatent
(86) Internationale Anmeldenummer: PCT/EP2011/054537
(87) Internationale Veröffentlichungsnummer: WO 2011/117347

(56) Entgegenhaltungen:
- EP-A1- 1 511 155
- DE-A1-102007 029 157
- US-A- 4 847 982
- US-A1- 2006 022 544

## Beschreibung

Die vorliegende Erfindung betrifft eine elektrische Maschine und eine Lenkungsvorrichtung.

Derartige elektrische Maschinen oder Elektromotoren sind allgemein bekannt und werden beispielsweise in Lenkungsantrieben von Kraftfahrzeug-Lenkungsvorrichtungen eingesetzt. Eine solche elektrische Maschine kann zum Beispiel als bürstenloser Permanentmagnetmotor mit einem Stator und einem Rotor mit Magnetpolen ausgebildet sein, wobei der Stator mehrphasige, z.B. dreiphasige, Wicklungsstränge aufweist.

Die erhöhten Anforderungen der Einsatzbedingungen in einem Kraftfahrzeug, insbesondere in Bezug auf ein möglichst geringes Bauvolumen, niedriges Gewicht, geringe Teilezahl und gleichzeitig hohem Wirkungsgrad mit geringer Geräuschentwicklung, führen meist dazu, dass im Hinblick auf ein oder mehrere der genannten Anforderungen Kompromisse eingegangen werden müssen. Daraus ergibt sich der stete Bedarf, eine in Bezug auf die obigen Anforderungen verbesserte elektrische Maschine bereitzustellen.

Das Dokument US 2006/0022544 A1 beschreibt einen Stator und einen bürstenlosen Motor, der den Stator mit mehreren Zähnen und einen Rotor aufweist. Es wird eine Technik zur Erleichterung einer Spulenwickelarbeit beschrieben, indem fortlaufend Spulen in der gleichen Richtung auf den Stator gewickelt werden, in welchem eine Vielzahl von Wicklungen eine Wicklungsgruppe gleicher Phase jeweils so angeordnet sind, dass sie Positionen aufweisen, in denen Phasen einer Induktionsspannung unterschiedlich sind, wodurch Spulengruppen von drei Phasen in einer Ringform angeordnet sind.

Vor diesem Hintergrund liegt der vorliegenden Erfindung daher die Aufgabe zugrunde, eine verbesserte elektrische Maschine anzugeben, in welcher eine symmetrische Phasenbelastung erreicht wird.

Erfindungsgemäß wird diese Aufgabe durch eine elektrische Maschine mit den Merkmalen des Patentanspruchs 1 und/oder durch eine Lenkungsvorrichtung mit den Merkmalen des Patentanspruchs 7 gelöst.

Demgemäß ist eine elektrische Maschine, insbesondere ein bürstenloser Permanentmagnetmotor, vorgesehen, mit einem Rotor, mit einem Stator, der mehrere Zähne mit darauf vorgesehenen Wicklungssträngen aufweist, wobei jeder Wicklungsstrang mindestens vier Wicklungen aufweist, wobei von den mindestens vier Wicklungen eines Wicklungsstrangs jeweils zwei Wicklungen zueinander in Reihe geschaltet sind und wobei diese in Reihe geschalteten Wicklungen parallel geschaltet sind. Dabei weist jeder Wicklungsstrang mindestens vier Wicklungen aufweist, von denen eine erste Wicklung und eine zweite Wicklung auf einer ersten Seite angeordnet sind und von denen eine dritte Wicklung und eine vierte Wicklung auf einer zweiten, der ersten Seite gegenüber liegenden Seite angeordnet sind. Die jeweils zwei im Stator gegenüberliegend angeordneten und in Reihe geschalteten Wicklungen sind dabei jeweils über Kreuzverbindungen in Reihe geschaltet und diese Reihenschaltungen sind wiederum durch Parallelverbindungen parallel derart geschaltet, dass die eine Parallelverbindung die erste Wicklung und die gegenüberliegende dritte Wicklung verbindet und die andere Parallelverbindung die zweite Wicklung und die gegenüberliegende vierte Wicklung verbindet.

Durch diese Art der Anordnung der Wicklungen (Wicklungsschema) ist es in einfacher Weise möglich, dass mechanische Einflüsse verursacht durch parasitische Effekte der stets vorhandenen und meist nur mit exorbitant hohem Aufwand vermeidbaren mechanischen Toleranzen von Motorbauteilen (z. B. Rotor, Stator und Zubehör) auf die elektrische Maschine und hier insbesondere auf das Verhalten im Betrieb verringert werden.

Es ergibt sich vorzugsweise sogar symmetrische Phasenbelastung sowie eine symmetrische induzierte Phasenspannung, so dass eine Phasenspannungssymmetrie auch bei größeren statischen Exzentrizitäten, beispielsweise von bis zu 0,3 mm, in einem relativ niedrigen Bereich von weniger als 0,3 % liegt.

Die elektrische Maschine weist dabei vorzugsweise sogar die gleiche Ausgangsleistung auf wie eine herkömmliche, als nicht erfindungsgemäß modifizierte elektrische Maschine.

Ebenfalls verringert sich eine Rastmoment- und eine Drehmomentwelligkeit (Torque Ripple, Cogging Torque) sowie ein Reibungsmoment (Friction Torque), insbesondere bei hohen Drehzahlen der elektrischen Maschine. Außerdem ist ein Phasenwiderstand gering und eine Geräuschentwicklung kann vorteilhafterweise verringert werden.

Insgesamt wird also eine elektrische Maschine bereitgestellt, die bei gleicher Leistungsklasse signifikant verbesserte elektrische und mechanische Eigenschaften aufweist.

Vorteilhafte Ausgestaltungen und Weiterbildungen der Erfindung ergeben sich aus den Unteransprüchen sowie aus der Beschreibung in Zusammenschau mit den Figuren der Zeichnung.

Vorzugsweise sind die jeweils zwei in Reihe geschalteten Wicklungen im Stator gegenüberliegend angeordnet. Damit erhöht sich ein Phasenausgleich.

Hierzu können die jeweils zwei im Stator gegenüberliegend angeordneten und in Reihe geschalteten Wicklungen jeweils zueinander um 150° oder 210° versetzt im Stator angeordnet sein.

Bei einer weiteren bevorzugten Ausführungsform der elektrischen Maschine weist der Stator zwölf Zähne und der Rotor zehn Pole auf. Alternativ dazu kann die Anzahl der Pole des Rotors auch vierzehn betragen.

In einer typischen Ausgestaltung sind die Wicklungsstränge miteinander in Sternschaltung oder/und in Dreieckschaltung verbunden.

In einer typischen Ausgestaltung ist die elektrische Maschine als bürstenloser Permanentmagnetmotor ausgebildet.

Eine Lenkungsvorrichtung eines Kraftfahrzeuges ist mit der oben beschriebenen erfindungsgemäßen elektrischen Maschine ausgerüstet.

Die obigen Ausgestaltungen und Weiterbildungen der Erfindung lassen sich - sofern dies sinnvoll ist - auf beliebige und geeignete Art und Weise miteinander kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Draufsicht auf eine elektrische Maschine;
- Fig. 2: ein Schaltbild einer Sternschaltung von Wicklungen einer elektrischen Maschine;
- Fig. 3: ein Schaltbild einer Dreieckschaltung von Wicklungen einer elektrischen Maschine;
- Fig. 4: eine Draufsicht einer elektrischen Maschine mit Wicklungen eines Wicklungsstrangs;
- Fig. 5: ein Schaltbild eines Wicklungsstrangs einer erfindungsgemäßen elektrischen Maschine;
- Fig. 6: ein Schaltbild einer Sternschaltung der Wicklungen der erfindungsgemäßen elektrischen Maschine;
- Fig. 7: ein Schaltbild einer Dreieckschaltung der Wicklungen der elektrischen Maschine; und
- Fig. 8: eine grafische Darstellung eines Einflusses statischer Exzentrizität.

In den Figuren der Zeichnung sind gleiche und funktionsgleiche Elemente und Merkmale - sofern nichts Anderes ausgeführt ist - mit denselben Bezugszeichen versehen.

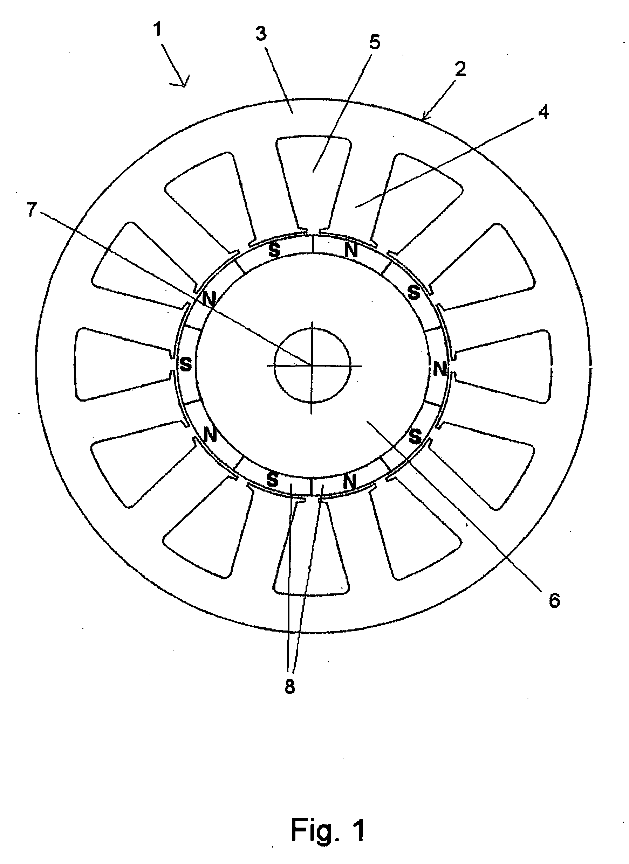

Fig. 1 zeigt eine schematische Draufsicht auf eine elektrische Maschine 1. Die elektrische Maschine 1 ist hier als bürstenloser Permanentmagnetmotor aufgebaut und weist einen Stator 1 mit einem umlaufenden Joch 3 auf, an welchem radial nach innen weisende Zähne 4 angebracht sind. Zwischen diesen Zähne 4, auch als Einzelzähne bezeichnet, sind Wickelräume 5 für Wicklungen jeweils um einen Zahn 4 festgelegt, die weiter unten noch erläutert werden. Die Zähne 4 umgeben einen Rotor 6, welcher innerhalb des Stators 2 um eine Rotorachse 7 drehbar angeordnet ist. Der Rotor 7 weist an seiner Umfangsfläche Magnete 8 mit wechselnden Magnetpolen N, S auf.

Die Anzahl der Zähne 4 des Stators 2 beträgt für diese elektrische Maschine 1 zwölf, wobei der Winkel zwischen den Zähnen 4 30° beträgt. Die Polzahl des Rotors 6 ergibt sich in diesem Beispiel mit der Anzahl der Magnete 8 zu acht.

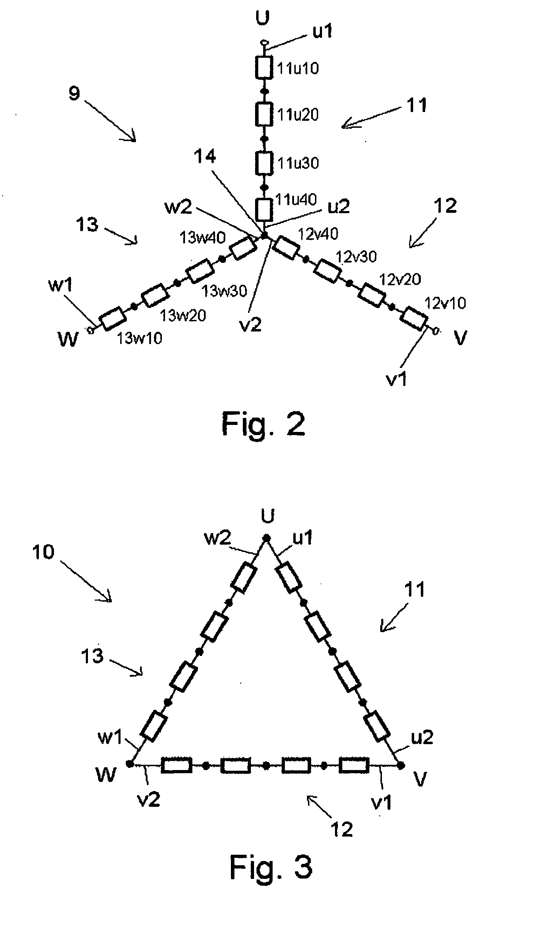

Die Wicklungen des Stators 2 der elektrischen Maschine 1 können sowohl in einer Sternschaltung 9, die in Fig. 2 gezeigt ist, als auch in einer Dreieckschaltung 10 gemäß Fig. 3 verbunden und/oder verschaltbar sein. Dabei sind Maschinenanschlusspunkte mit U, V und W bezeichnet.

In der Sternschaltung 9 in Fig. 2 ist an dem Maschinenanschlusspunkt U ein U-Wicklungsstrang 11 mit einem Stranganschlusspunkt u1, an dem Maschinenanschlusspunkt V ein V-Wicklungsstrang 12 mit einem Stranganschlusspunkt v1 und an dem Maschinenanschlusspunkt W ein W-Wicklungsstrang 13 mit einem Stranganschlusspunkt w1 angeschlossen. Die anderen Stranganschlusspunkte u2, v2 und w3 sind zusammengeschaltet und bilden einen Sternpunkt 14. Jeder dieser Wicklungsstränge 11, 12, 13 weist hier eine Reihenschaltung von vier Einzelwicklungen auf: Der U-Wicklungsstrang 11 mit U-Wicklungen 11u10, 11u20, 11u30 und 11u90, der V-Wicklungsstrang 12 mit V-Wicklungen 12v10, 12v20, 12v30 und 12v40 und der W-Wicklungsstrang 13 mit W-Wicklungen 13w10, 13w20, 13w30 und 13w40.

Die Dreieckschaltung 10 nach Fig. 3 weist die oben beschriebenen Wicklungsstränge 11, 12, 13 in der so genannten Dreieckschaltung auf, wobei die Stranganschlusspunkte u1 und w2 mit dem Maschinenanschlusspunkt U, die Stranganschlusspunkte u2 und v1 mit dem Maschinenanschlusspunkt V und die Stranganschlusspunkte v2 und w1 mit dem Maschinenanschlusspunkt W verbunden sind.

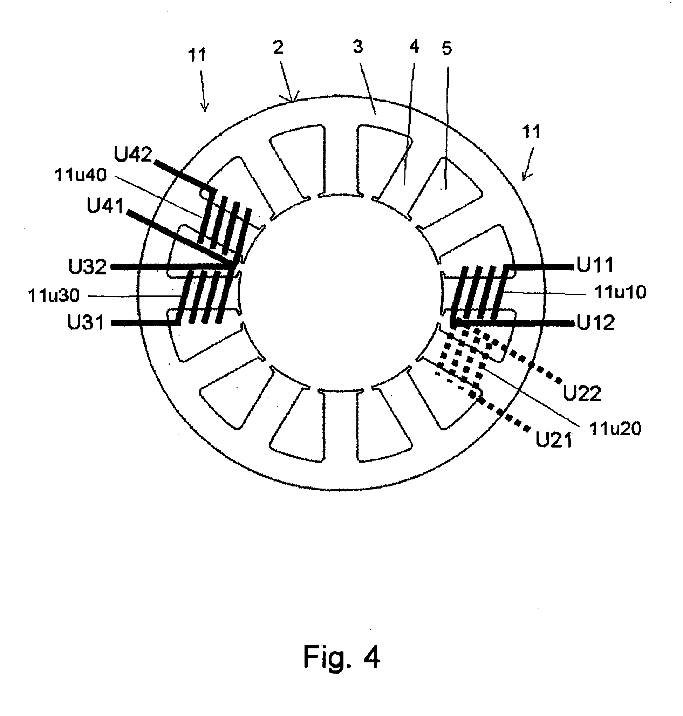

Eine Anordnung der einzelnen Wicklungen eines Wicklungsstrangs 11, 12, 13 wird im Zusammenhang mit Fig. 4 in einer Draufsicht der elektrischen Maschine 1 (hier ohne Rotor 6 gezeigt) am Beispiel des U-Wicklungsstrangs 11 erläutert.

Eine erste U-Wicklung 11u10 ist auf der rechten Seite des Stators 2 um einen Zahn 4 in der Fig. 4 angeordnet. Um 30° versetzt darunter liegend ist eine zweite U-Wicklung 11u20 gewickelt und. Der ersten U-Wicklung 11u10 liegt eine dritte U-Wicklung 11u30 gegenüber, und der zweiten U-Wicklung 11u20 liegt eine vierte U-Wicklung 11u40 ebenfalls gegenüber. Die erste U-Wicklung 11u10 ist zu der dritten U-Wicklung 11u30 um 180° und zu der vierten U-Wicklung 11u40 um 150° bzw. 210° versetzt angeordnet. Jede U-Wicklung besitzt Wicklungsanschlusspunkte uij, die wie folgt verteilt sind: u11 und u12 für 11u10; u21 und u22 für 11u20; u31 und u32 für 11u30; und u41 und u42 für 11u40. Dieses gilt entsprechend für die V- und W-Wicklungen, was nicht gezeigt, aber leicht vorstellbar ist.

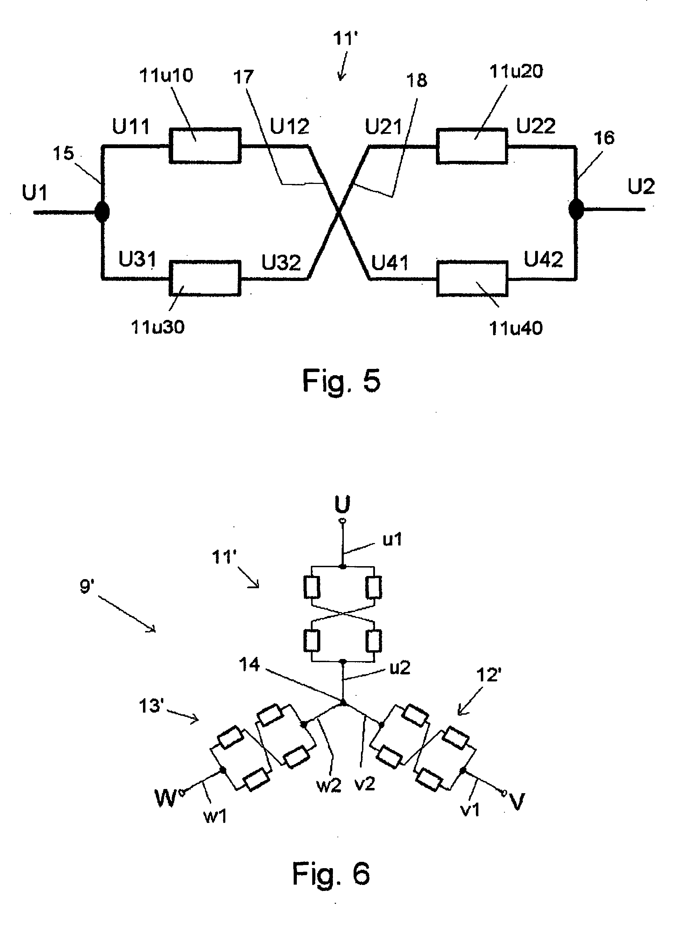

Diese Wicklungen 11u10 bis 11u40 werden nach dem Schaltbild eines U-Wicklungsstrangs 11' der erfindungsgemäßen elektrischen Maschine 1 gemäß Fig. 5 verbunden. Dieses gilt ebenfalls entsprechend für die V- und W-Wicklungen.

Fig. 5 zeigt dazu als Beispiel den U-Wicklungsstrang 11', wobei dieses Beispiel auch für einen V-Wicklungsstrang 12' und einen W-Wicklungsstrang 13' gilt. Der Stranganschlusspunkt u1 verbindet die Wicklungsanschlusspunkte u11 der U-Wicklung 11u10 und u31 der U-Wicklung 11u30 mit einer ersten Parallelverbindung 15. Der Wicklungsanschlusspunkt u12 der U-Wicklung 11u10 ist über eine erste Kreuzverbindung 17 mit dem Wicklungsanschlusspunkt u41 der U-Wicklung 11u40. Eine zweite Kreuzverbindung 18 verbindet den Wicklungsanschlusspunkt u32 der U-Wicklung 11u30 mit dem Wicklungsanschlusspunkt u21 der U-Wicklung 11u20. Schließlich sind die Wicklungsanschlusspunkte u22 der U-Wicklung 11u20 und u42 der U-Wicklung 11u40 mit einer zweiten Parallelverbindung 16 verbunden und an dem Stranganschlusspunkt u2 angeschlossen.

Somit sind gemäß Fig. 5 jeweils zwei U-Wicklungen, nämlich 11u10 und 11u40 sowie 11u30 und 11u20, über die Kreuzverbindungen 17, 18 in Reihe geschaltet. Diese Reihenschaltungen sind wiederum durch die Parallelverbindungen 15, 16 parallel geschaltet. Daraus ergibt sich ein geringerer Gesamtwiderstand des U-Wicklungsstrangs 11' als derjenige des U-Wicklungsstrangs 11 (siehe Fig. 2 und 3) in Reihenschaltung aller U-Wicklungen 11u10 bis 11u40.

Fig. 6 zeigt ein Schaltbild einer Sternschaltung 9' mit Wicklungssträngen 11', 12' und 13', deren Wicklungen in der Schaltung nach Fig. 5 verbunden sind.

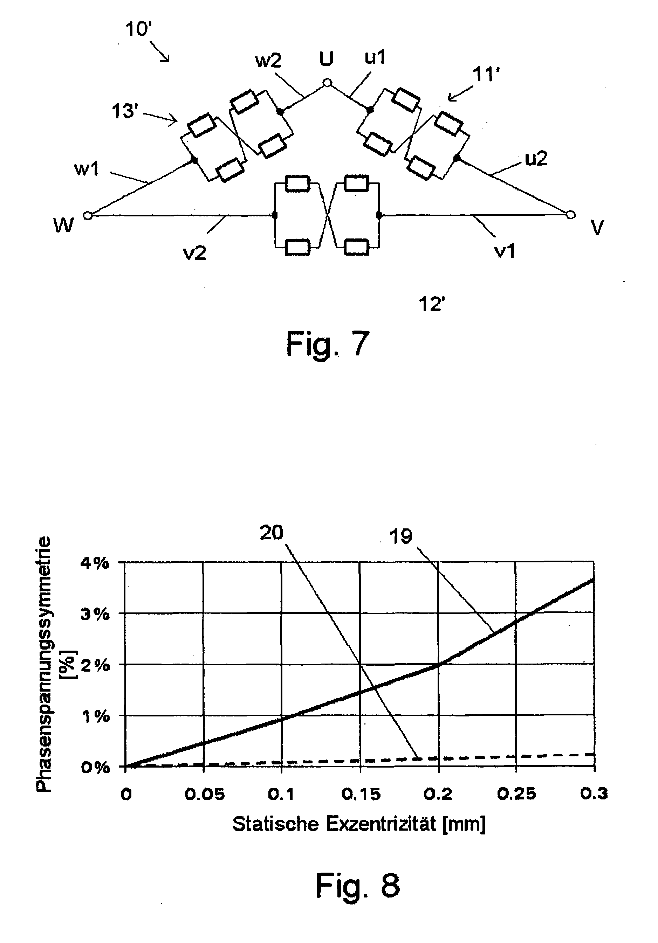

Eine Dreieckschaltung 10' mit Wicklungen nach Fig. 5 ist in Fig. 7 illustriert. Die einzelnen Bezugszeichen der Einzelwicklungen und deren Wicklungsanschlüsse der jeweiligen Wicklungsstränge 11', 12' und 13' sind nicht angegeben. Sie ergeben sich aus der Fig. 5, wie oben beschrieben ist.

In Zusammenschau der Fig. 5 bis 7 mit Fig. 4 ist zu erkennen, dass jeweils zwei um 150° bzw. 210° zu einander versetzte, gegenüberliegende U-Wicklungen (11u10 und 11u40 sowie 11u20 und 11u40) des U-Wicklungsstrangs 11' in Reihenschaltung verbunden sind. Hierbei sind diese in Reihe geschalteten, um 150° bzw. 210° zu einander versetzten, gegenüberliegende U-Wicklungen 11u10 und 11u40 außerdem parallel zu den in Reihe geschalteten, um 150° bzw. 210° zu einander versetzten, gegenüberliegende U-Wicklungen 11u20 und 11u40 geschaltet.

Zum Beispiel wird bei einer im Betrieb der elektrischen Maschine 1 auftretenden Exzentrizität des Rotors 7 (zum Beispiel auch bedingt durch Biegemomente) eine Beeinflussung einer Phasensymmetrie bedeutend verringert. Bei einer solchen Exzentrizität des Rotors 7, die beispielsweise in Fig. 4 nach rechts wirkt, verkleinert sich ein Spalt zwischen Rotoraußenfläche (siehe Fig. 1) zu den Zähnen 4, und die beiden U-Wicklungen 11u10 und 11u20 werden somit stärker beeinflusst als die gegenüberliegenden U-Wicklungen 11u30 und 11u40, da bei diesen der Rotor 7 durch die Exzentrizität einen größeren Spalt bewirkt. Da nun die U-Wicklungen 11u10 und 11u20 nicht miteinander in Reihe geschaltet sind, sondern gemäß Fig. 5 jeweils mit einer gegenüberliegenden U-Wicklung 11u30 und 11u40 verbunden und außerdem parallel geschaltet sind, ergibt sich für den gesamten U-Wicklungsstrang 11', dass die stärkeren Beeinflussungen, z.B. Induktion einer höheren Spannung, der beiden U-Wicklungen 11u10 und 11u20 durch die schwächeren Beeinflussungen, z.B. Induktion einer niedrigeren Spannung der anderen beiden U-Wicklungen 11u30 und 11u40 kompensiert werden. Dadurch ist eine Phasensymmetrie der elektrischen Maschine 1 bedeutend verbessert und ein verbesserter Phasenausgleich geschaffen.

Hierzu illustriert Fig. 8 einen Einfluss statischer Exzentrizität auf Phasenspannungssymmetrien in einer grafischen Darstellung. Eine Phasenspannungssymmetrie ist in Prozent über einer statischen Exzentrizität in mm aufgetragen. Dabei zeigt eine durchgezogene Kurve einer ersten Wicklungsverbindung 19 bei zunehmender statischer Exzentrizität bis 0,3 mm einen Anstieg von bis zu 3,8 %. Diese erste Wicklungsverbindung 19 gehört zu der Reihenschaltung der Wicklungsstränge 11, 12, 13 nach Fig. 2 und 3. Bei einer Ausführung der Wicklungsstränge 11', 12', 13' gemäß Fig. 5 bis 7 ergibt sich die gestrichelte (Fast-) Gerade einer zweiten Wicklungsverbindung 20, wobei der Einfluss der statischen Exzentrizität bei einem Wert von 0,3 mm unter ca. 0,3 % bleibt.

Ebenfalls verringert sich eine Rastmoment- und Drehmomentwelligkeit (Torque Ripple, Cogging Torque), sowie ein Reibungsmoment (Friction Torque), insbesondere bei hohen Drehzahlen der elektrischen Maschine 1. Außerdem ist ein Phasenwiderstand gering.

Obgleich die vorliegende Erfindung vorstehend anhand eines bevorzugten Ausführungsbeispiels erläutert wurde, sei sie nicht darauf beschränkt, sondern lässt sich auf beliebige Art und Weise modifizieren, ohne vom Gegenstand der vorliegenden Erfindung abzuweichen.

Es kann auch möglich sein, dass mehr als vier Wicklungen pro Wicklungsstrang verwendet werden, zum Beispiel sechs, acht, zehn usw. Natürlich können auch mehr als drei Wicklungsstränge Verwendung finden.

Auch eine elektrische Maschine 1 mit einem Stator 2 mit einer Zähnezahl von vierzehn ist möglich.

### Bezugszeichenliste

- 1: Elektrische Maschine
- 2: Stator
- 3: Joch
- 4: Zahn
- 5: Wickelraum
- 6: Rotor
- 7: Rotorachse
- 8: Magnet
- 9, 9': Sternschaltung
- 10, 10': Dreieckschaltung
- 11, 11': U-Wicklungsstrang
- 11u10, 11u20, 11u30, 11u40: U-Wicklungen
- 12, 12': V-Wicklungsstrang
- 12v10, 12v20, 12v30, 12v40: V-Wicklungen
- 13, 13': W-Wicklungsstrang
- 13w10, 13w20, 13w30, 13w40: W-Wicklungen
- 14: Sternpunkt
- 15: Erste Parallelverbindung
- 16: Zweite Parallelverbindung
- 17: Erste Kreuzverbindung
- 18: Zweite Kreuzverbindung
- 19: Erste Wicklungsverbindung
- 20: Zweite Wicklungsverbindung
- N, S: Magnetpole
- ui, vi, wi: Stranganschlusspunkte
- uij, vij, wij: Wicklungsanschlusspunkte
- U, V, W: Maschinenanschlusspunkte

## Patentansprüche

1. Elektrische Maschine (1),
mit einem Rotor (6),
mit einem Stator (2), der mehrere Zähne (4) mit darauf vorgesehenen Wicklungssträngen (11', 12', 13') aufweist,
- wobei jeder Wicklungsstrang (11', 12', 13') mindestens vier Wicklungen (11u10 bis 11u40; 12v10 bis 12v40; 13w10 bis 13w40) aufweist, von denen eine erste wicklung (11u10; 12v10, 13v10) und eine zweite Wicklung (11u20; 12v20, 13v20) auf einer ersten Seite angeordnet sind und von denen eine dritte Wicklung (11u30, 12v30, 13v30) und eine vierte Wicklung (11u40, 12v40, 13w40) auf einer zweiten, der ersten Seite gegenüber liegenden Seite angeordnet sind,
**dadurch gekennzeichnet, dass**
- die jeweils zwei im Stator (2) gegenüberliegend angeordneten und in Reihe geschalteten Wicklungen (11...13u...w10 und 11...13u...w40; 11...13u...w20 und 11...13u...w30) jeweils über Kreuzverbindungen (17, 18) in Reihe geschaltet und diese Reihenschaltungen wiederum durch Parallelverbindungen (15, 16) parallel derart geschaltet sind, dass die eine Parallelverbindung (15) die erste Wicklung (11u10; 12v10, 13v10) und die gegenüberliegende dritte Wicklung (11u30, 12v30, 13v30) verbindet und die andere Parallelverbindung (16) die zweite Wicklung (11u20; 12v20, 13v20) und die gegenüberliegende vierte Wicklung (11u40, 12v40, 13w40) verbindet.

2. Maschine nach Anspruch 1,
**dadurch gekennzeichnet,**
**dass** die jeweils zwei im Stator (2) gegenüberliegenden angeordneten und in Reihe geschalteten Wicklungen (11...13u...w10 und 11...13u...w40; 11...13u...w20 und 11...13u...w30) jeweils zueinander um 150° oder 210° versetzt im Stator (2) angeordnet sind.

3. Maschine nach einem der vorhergehenden Ansprüche
**dadurch gekennzeichnet,**
**dass** die Anzahl der Zähne (4) des Stators (2) zwölf beträgt.

4. Maschine nach einem der vorhergehenden Ansprüche
**dadurch gekennzeichnet,**
**dass** die Anzahl der Pole des Rotors (6) zehn beträgt.

5. Maschine nach einem der Ansprüche 1 bis 3
**dadurch gekennzeichnet,**
**dass** die Anzahl der Pole des Rotors (6) vierzehn beträgt.

6. Maschine nach einem der vorhergehenden Ansprüche
**dadurch gekennzeichnet,**
**dass** die Wicklungsstränge (11' - 13') miteinander in Sternschaltung (9') verbunden sind.

7. Maschine nach einem der vorhergehenden Ansprüche
**dadurch gekennzeichnet,**
**dass** die Wicklungsstränge (11' - 13') miteinander in Dreieckschaltung (10') verbunden sind.

8. Maschine nach einem der vorhergehenden Ansprüche
**dadurch gekennzeichnet,**
**dass** die elektrische Maschine (1) als bürstenloser Permanentmagnetmotor (1) ausgebildet ist.

9. Lenkungsvorrichtung eines Kraftfahrzeuges, welche eine elektrische Maschine (1) nach einem der Ansprüche 1 bis 8 aufweist.

## Claims

1. Electric motor (1),
comprising a rotor (6),
comprising a stator (2) which comprises a plurality of teeth (4) having winding phases (11', 12', 13') provided thereon,
- each winding phase (11', 12', 13') comprising at least four windings (11u10 to 11u40; 12v10 to 12v40; 13w10 to 13w40), of which a first winding (11u10; 12v10, 13v10) and a second winding (11u20; 12v20, 13v20) are arranged on a first side and of which a third winding (11u30, 12v30, 13v30) and a fourth winding (11u40, 12v40, 13w40) are arranged on a second side opposite the first side,
**characterised in that**
- the two windings (11-13u-w10 and 11-13u-w40; 11-13u-w20 and 11-13u-w30) in each case which are arranged opposite in the stator (2) and connected in series are in each case connected in series via cross-connections (17, 18), and these series connections are in turn connected in parallel via parallel connections (15, 16) in such a way that one parallel connection (15) connects the first winding (11u10; 12v10, 13v10) and the opposite third winding (11u30, 12v30, 13v30) and the other parallel connection (16) connects the second winding (11u20; 12v20, 13v20) and the opposite fourth winding (11u40, 12v40, 13w40).

2. Motor according to claim 1, **characterised in that** the two windings (11-13u-w10 and 11-13u-w40; 11-13u-w20 and 11-13u-w30) in each case which are arranged opposite in the stator (2) and connected in series are in each case arranged mutually offset by 150° or 210° in the stator (2).

3. Motor according to either of the preceding claims, **characterised in that** the number of teeth (4) of the stator (2) is twelve.

4. Motor according to any of the preceding claims, **characterised in that** the number of poles of the rotor (6) is ten.

5. Motor according to any of claims 1 to 3, **characterised in that** the number of poles of the rotor (6) is fourteen.

6. Motor according to any of the preceding claims, **characterised in that** the winding phases (11'-13') are interconnected in a star connection (9').

7. Motor according to any of the preceding claims, **characterised in that** the winding phases (11'-13') are interconnected in a triangular connection (10').

8. Motor according to any of the preceding claims, **characterised in that** the electric motor (1) is in the form of a brushless permanent-magnet motor (1).

9. Steering device for a motor vehicle, which comprises an electric motor (1) according to any of claims 1 to 8.

## Revendications

1. Machine électrique (1), comportant
un rotor (6),
un stator (2), qui présente plusieurs dents portant des faisceaux d'enroulements (11', 12', 13'),
- chaque faisceau d'enroulements (11', 12', 13') présentant au moins quatre enroulements (11u10 à 11u40 12v10 à 12v40 ; 13w10 à 13w40), parmi lesquels un premier enroulement (11u10, 12v10, 13v10) et un second enroulement (11u20, 12v20, 13v20) sont disposés sur une première face et parmi lesquels un troisième enroulement (11u30, 12v30, 13v30) et un quatrième enroulement (11u40, 12v40, 13w40) sont disposés sur une seconde face en regard de la première face,
**caractérisée par le fait que**
- les deux enroulements (11...13u...w10 et 11...13u...w40 ; 11...13u...w20 et 11...13u...w30) respectifs disposés en regard dans le stator (2) et montés en série sont montés en série respectivement par des jonctions en croix (17, 18) et ces montages en série sont à leur tour montés en parallèle par des jonctions en parallèle (15, 16) de telle manière qu'une jonction en parallèle (15) relie le premier enroulement (11u10, 12v10, 13v10) et le troisième enroulement (11u30, 12v30, 13v30) en regard et l'autre jonction en parallèle (16) relie le second enroulement (11u20, 12v20, 13v20) et le quatrième enroulement (11u40, 12v40, 13w40) en regard.

2. Machine selon la revendication 1, **caractérisée par le fait que** les deux enroulements (11...13u...w10 et 11...13u...w40; 11...13u...w20 et 11...13u...w30) respectifs disposés en regard dans le stator (2) et montés en série sont disposés respectivement décalés l'un par rapport à l'autre de 150° ou 210° dans le stator (2).

3. Machine selon l'une des revendications précédentes, **caractérisée par le fait que** le nombre de dents (4) du stator (2) est de douze.

4. Machine selon l'une des revendications précédentes, **caractérisée par le fait que** le nombre de pôles du rotor (6) est de dix.

5. Machine selon l'une des revendications 1 à 3, **caractérisée par le fait que** le nombre de pôles du rotor (6) est de quatorze.

6. Machine selon l'une des revendications précédentes, **caractérisée par le fait que** les faisceaux d'enroulements (11' à 13') sont couplés entre eux en branchement en étoile (9').

7. Machine selon l'une des revendications précédentes, **caractérisée par le fait que** les faisceaux d'enroulements (11' à 13') sont couplés entre eux en branchement en triangle (10').

8. Machine selon l'une des revendications précédentes, **caractérisée par le fait que** la machine électrique (1) est réalisée sous la forme d'un moteur à aimant permanent sans balais (1).

9. Dispositif de direction d'un véhicule automobile, qui présente une machine électrique (1) selon l'une des revendications 1 à 8.
